(19) Europäisches Patentamt
European Patent Office
Office européen des brevets

(11) Veröffentlichungsnummer: **0 079 071**
**A1**

(12) # EUROPÄISCHE PATENTANMELDUNG

(21) Anmeldenummer: **82110264.7**

(22) Anmeldetag: **06.11.82**

(51) Int. Cl.$^3$: **C 08 F 220/56**
C 08 F 226/02, C 08 F 212/14
G 01 K 7/02
//(C08F220/56, 226/02, 212/14),
(C08F226/02, 220/56, 212/14),
(C08F212/14, 226/02, 220/56)

(30) Priorität: **11.11.81 DE 3144770**

(43) Veröffentlichungstag der Anmeldung:
**18.05.83 Patentblatt 83/20**

(84) Benannte Vertragsstaaten:
**AT DE FR GB NL**

(71) Anmelder: **CASSELLA Aktiengesellschaft**
**Hanauer Landstrasse 526**
**D-6000 Frankfurt am Main 61(DE)**

(72) Erfinder: **Kühlein, Klaus, Dr.**
**Fasanenstrasse 41**
**D-6233 Kelkheim(DE)**

(72) Erfinder: **Greiner, Ulrich, Dr.**
**Nidderauer Strasse 13**
**D-6319 Schöneck 1(DE)**

(72) Erfinder: **Riegel, Ulrich**
**Steinäckerstrasse 6**
**D-6000 Frankfurt am Main 61(DE)**

(72) Erfinder: **Engelhardt, Friedrich, Dr.**
**Hünfelder Strasse 20**
**D-6000 Frankfurt am Main 61(DE)**

(72) Erfinder: **Hille, Martin, Dr.**
**In den Eichen 46**
**D-6237 Liederbach(DE)**

(72) Erfinder: **Wittkus, Heinz**
**Manderscheider Strasse 9**
**D-6000 Frankfurt am Main 71(DE)**

(74) Vertreter: **Urbach, Hans-Georg, Dr. et al,**
**Hanauer Landstrasse 526**
**D-6000 Frankfurt am Main 61(DE)**

(54) **Wasserlösliches Copolymerisat, seine Herstellung und Verwendung.**

(57) Neue wasserlösliche Copolymerisate die in statistischer Verteilung zu 5 bis 95 Gew.% aus Resten der Formel I

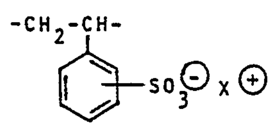

(I)

5 bis 95 Gew.% aus Resten der Formel II

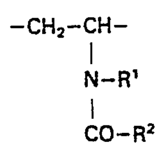

(II)

0 bis 80 Gew.% aus Resten der Formel III

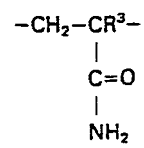

(III)

bestehen sowie deren durch Partialhydrolyse erhältliche Derivate, wobei

$R^1$ und $R^2$ gleich oder verschieden sind und Wasserstoff, Niederalkyl oder gemeinsam Polymethylen

$R^3$ Wasserstoff oder Methyl und

$X^{\ominus}$ ein Kation bedeutet.

Die Herstellung erfolgt aus den den Resten I bis III entsprechenden Vinyl-Monomeren durch Copolymerisation.

Die erfindungsgemäßen Copolymerisate sind hervorragend geeignet als Bohrspülzusatz und als Zusatz für Tiefbohrzementschlämme.

EP 0 079 071 A1

0079071

Ref. Nr. 3235
Dr.Va/lro

Wasserlösliches Copolymerisat, seine Herstellung und Verwendung

Die vorliegende Erfindung betrifft ein neues wasserlösliches Copolymerisat, das in statistischer Verteilung zu 5 bis 95 Gew.% aus Resten der Formel I

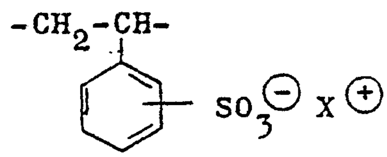

(I)

5 bis 95 Gew.% aus Resten der Formel II

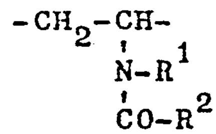

(II)

0 bis 80 Gew.% aus Resten der Formel III

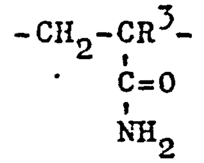

(III)

besteht sowie dessen durch Partialhydrolyse erhältliche Derivate, wobei

$R^1$ und $R^2$ gleich oder verschieden sind und Wasserstoff,Methyl oder Ethyl, oder gemeinsam Trimethylen oder Pentamethylen
$R^3$ Wasserstoff oder Methyl und
$X^{\oplus}$ ein Kation bedeutet, seine Herstellung und Verwendung.

Das erfindungsgemäße Copolymerisat ist hervorragend geeignet als Bohrspülzusatz und als Zusatz für Tiefbohrzementschlämme.

Bevorzugte erfindungsgemäße Copolymerisate bestehen in statistischer Verteilung zu 40 - 80 Gew.% aus Resten der Formel I, 10 - 30 Gew. % aus Resten der Formel II und zu 0 - 60 Gew. % aus Resten der Formel III.

Das Kation $X^{\oplus}$ kann sich prinzipiell von jeder wasserlöslichen bekannten Base ableiten, deren Stärke ausreicht, die Sulfo-

gruppen der erfindungsgemäßen Copolymere zu neutralisieren und die die Wasserlöslichkeit der Copolymeren nicht beeinträchtigt. Die Auswahl kann somit in einfacher bekannter Weise erfolgen.

Zweckmäßigerweise bedeutet jedoch $X^{\oplus}$ ein Alkalikation, insbesondere ein Natrium- oder Kaliumkation oder ein Kation der Formel $H\overset{\oplus}{N}R_3^4$, wobei die drei Reste $R^4$ gleich oder verschieden sind und für Wasserstoff, Alkyl mit 1 bis 4 C-Atomen oder Hydroxyäthyl stehen.

In den durch Partialhydrolyse der erfindungsgemäßen Copolymerisate erhältlichen Derivaten ist ein Anteil von bis zu 60 %, vorzugsweise 10-30 %, der ursprünglich vorhandenen Reste der Formel III durch Reste der Formel V

$$-CH_2-\underset{COO^{\ominus}\ X^{\oplus}}{\underset{|}{C}R^3}- \qquad (V)$$

ersetzt, wobei $X^{\oplus}$ die oben genannten Bedeutungen hat.

Die sehr gute dispersionsstabilisierende und viskositätserhöhende Wirkung der erfindungsgemäßen Copolymerisate und ihrer Partialhydrolysate in konzentrierten Salzlösungen und ihre Temperaturstabilität wird in vielen Fällen durch Anwesenheit von Borat-Anionen noch weiter erhöht. Diese vorteilhaften, Borat-Anionen enthaltenden erfindungsgemäßen Copolymerisate und deren Partialhydrolysate enthalten, berechnet als $H_3BO_3$, 2,5 bis 35 Gew. %, vorzugsweise 5 bis 25 Gew. %, Borat-Anionen, bezogen auf das Gewicht des unverseiften Polymeren.

Außer auf den günstigen Eigenschaften der im Copolymer enthaltenen funktionellen Gruppen beruhen die gegenüber den bisher bekannten Copolymeren höheren Viskositäten in konz. Salzlösungen sowie die Temperaturstabilität vermutlich auf einer zusätzlichen Interaktion der Borat-Anionen mit den Ketten der Copolymeren.

Die Sulfonsäuregruppe kann in den Resten der Formel I in 2-, 3- und insbesondere in 4-Stellung des Phenylkerns stehen. Die erfindungsgemäßen Copolymerisate können jedoch auch statistisch

verteilt neben den 4-Sulfophenyl-Resten die anderen isomeren Reste enthalten; dies ist dann besonders bevorzugt, wenn die Isomeren in einer solchen Verteilung vorliegen, wie sie in der technischen rohen Styrolsulfonsäure vorhanden ist.

Die erfindungsgemäßen Copolymerisate können im Molekül aus jeder der durch die allgemeinen Formeln II und III definierten Baugruppen selbstverständlich auch mehrere verschiedene Individuen, die sich in den Bedeutungen der Symbole $R^1$, $R^2$ oder $R^3$ unterscheiden, enthalten.

So können sie z.B. im gleichen Polymermolekül sowohl ringoffene neben ringgeschlossenen Vinylamid-Bausteinen der Formel II oder auch Acrylamid- neben Methacrylamid-Resten enthalten.

In der Regel enthalten die erfindungsgemäßen Copolymerisate aus der Gruppe der allgemeinen Formel II nicht mehr als 3, vorzugsweise nicht mehr als je 2, verschiedene Bausteine.

Die Herstellung wasserlöslicher Polymerisate, welche Sulfonsäuregruppen im Makromolekül eingebaut enthalten, ist bereits in zahlreichen Patenten sowie in der Fachliteratur ausführlich beschrieben worden. So ist z.B. die Synthese von Copolymeren der Vinylsulfonsäure mit Acrylamid und Vinylpyrrolidon im J. Polymer Sci., 38 147 (1959) veröffentlicht worden.

Im DBP 1 101 760 ist ein Verfahren zur Herstellung wasserlöslicher Copolymerisate aus Vinylsulfonsäure und Acrylnitril bzw. Methacrylnitril gegebenenfalls im Gemisch mit weiteren ethylenisch ungesättigten Verbindungen beschrieben worden. Copolymerisate aus Vinyl bzw. Alkylsulfonaten mit Acrylamid und Vinylamiden sind z.B. in der DAS 2 444 108 beschrieben worden.

Wasserlösliche Copolymerisate, die Styrolsulfonsäure als Comonomeres enthalten, sind bereits aus zahlreichen Druckschriften bekannt. So sind beispielsweise Copolymerisate aus Styrolsulfonsäure und Acrylsäure gemäß US-PS 3 340 238 als Flockungsmittel, gemäß US-PS 3 620 826 als soilrelease-Mittel und gemäß

der DE-OS 2 103 197 als Antistaticum für Photoemulsionen einzusetzen. Copolymere aus Styrolsulfonsäure und Acrylamid können gemäß der DE-OS 2 210 367 zur Herstellung von Mikrokapseln eingesetzt werden. Aus der GB-PS 1 184 445 ist es bekannt, Copolymerisate von Vinylpyrrolidon u.a. mit Styrolsulfonsäure als Hilfsmittel bei der Durchführung eines photographischen Silber-Farbbleich-Verfahrens einzusetzen. Auch die Herstellung von faserbildenden, sauer modifizierten Polymeren, die als Hauptmonomeres Acrylnitril aufweisen, ist z.B. aus der japanischen Patentschrift 7 028 011 (CA 74 P 127 379 q) und der japanischen Kokai 74 - 111 326 bekannt.

Wasserlösliche Copolymere der erfindungsgemäßen Monomerenkombination sind jedoch bisher nicht bekannt geworden.

Die erfindungsgemäßen Copolymerisate, soweit sie Comonomere der Formel II einpolymerisiert enthalten, bei denen $R^1$ und $R^2$ gemeinsam Trimethylen oder Pentamethylen bedeuten, lassen sich in der aus dem Stand der Technik bekannten Weise, z.B. gemäß den Angaben der US-PS 3 929 741 durch Umsetzung der Monomeren bei Temperaturen von etwa 10 bis 120°C, vorzugsweise bei 40 bis 80°C, in Gegenwart von geeigneten Polymerisationskatalysatoren herstellen.

Wenn man unter analogen Bedingungen die Copolymerisation von Styrolsulfonsäure mit nicht ringgeschlossenen N-Vinylamiden, d.h. solchen der allgemeinen Formel

$$CH_2{=}CH{-}\overset{R^1}{\overset{|}{N}}{-}COR^2$$

in denen $R^1$ und $R^2$ gleich oder verschieden sind und Wasserstoff, Methyl oder Ethyl bedeutet, durchführt, so treten jedoch Nebenreaktionen ein und die Polymerisation zu wasserlöslichen Produkten ist behindert.

Soweit die erfindungsgemäßen Copolymerisate Reste der Formel II enthalten, bei denen $R^1$ und $R^2$ nicht gemeinsam Trimethylen oder Pentamethylen bedeuten, ist es erforderlich, die Styrolsulfonsäure vor der Polymerisation durch Zusatz von Basen in das Salz mit dem Kation $X^{\oplus}$ zu überführen. Die hierbei zweckmäßigerweise eingesetzenden Basen sind die Hydroxyde oder Salze der Kationen $X^{\oplus}$ mit schwachen Säuren, wie z.B. Kohlensäure oder Phosphorsäure, oder im Falle von Aminbasen $NH_3$ oder die freien Amine.

Die Neutralisation der sauren Komponenten vor der Polymerisation ist aber auch bei der Copolymerisation von ringgeschlossenen Verbindungen möglich und in der Regel sogar vorteihaft.

Zweckmäßigerweise werden somit zur Herstellung von je 100 Gewichtsteilen des Copolymerisats 5 bis 95 Gewichtsteile Styrolsulfonsäure der Formel Ia

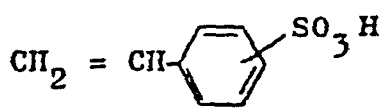
(Ia)

in Wasser oder in einer Wasser/Alkanol-Mischung, in der auch das fertige Copolymerisat noch löslich ist, oder einem wassermischbaren organischen Lösungsmittel gelöst, für den Fall, daß $R^1$ und $R^2$ nicht gemeinsam Trimethylen oder Pentamethylen bedeuten, obligatorisch, für den Fall, daß $R^1$ und $R^2$ gemeinsam Trimethylen oder Pentamethylen bedeuten, gegebenenfalls durch Zusatz einer Base die Sulfosäure neutralisiert, danach 5 bis 95 Gewichtsteile eines Vinylacylamids der Formel IIa

$$CH_2=CH-\overset{R^1}{\overset{|}{N}}-CO-R^2$$

worin $R^1$ und $R^2$ gleich oder verschieden sind und Wasserstoff, Methyl oder Ethyl oder gemeinsam Trimethylen bedeuten und gegebenenfalls 0 bis 80 Gewichtsteile Acrylamid und/oder Methacrylamid zugefügt und die Copolymerisation in an sich bekannter Weise eingeleitet und bei 10 bis 120°C durchgeführt.

Bevorzugt ist der Einsatz der Styrol-4-sulfonsäure. Die Isomeren können jedoch auch in Mischung eingesetzt werden, insbesondere ist es vorteilhaft, technische Styrolsulfonsäure, d.h. das bei der Herstellung anfallende Isomerengemisch einzusetzen.

Bevorzugte erfindungsgemäße Copolymerisate werden erhalten, wenn zur Herstellung von je 100 Gewichtsteilen des Copolymerisats 40 - 80 Gewichtsteile Styrolsulfonsäure der Formel Ia, 10 - 30 Gewichtsteile des Vinylacylamids der Formel IIa, 0 - 60 Gewichtsteile Acrylamid und/oder Methacrylamid eingesetzt werden.

Die Polymerisation kann als Lösungspolymerisation, als Fällungspolymerisation oder in umgekehrter Emulsion, z.B. gemäß den Angaben der deutschen Patentschrift 1 089 173, ausgeführt werden.

Bei der Verwendung von Wasser oder einer Wasser/Alkanol-Mischung als Lösungsmittel, wobei ein mit Wasser mischbarer Alkanol mit 1 bis 4 C-Atomen eingesetzt wird, und das fertige Copolymerisat in der Wasser/Alkanol-Mischung löslich ist, verläuft die Polymerisation unter den Bedingungen der Lösungspolymerisation, und es wird eine viskose wäßrige bzw. wäßrig/alkanolische Lösung des erfindungsgemäßen Copolymerisats erhalten, aus der das Produkt durch Abdestillieren des Lösungsmittels oder Ausfällung durch Mischen der Lösung mit einem wassermischbaren organischen Lösungsmittel, wie Methanol, Ethanol, Aceton oder dergleichen isoliert werden kann.

Vorzugsweise wird jedoch die erhaltene wäßrige bzw. wäßrig/alkanolische Lösungs direkt, evtl. nach Einstellen einer gewünschten Konzentration, der bestimmungsgemäßen Verwendung zugeführt.

Bei der Durchführung der Polymerisation in umgekehrter Emulsion wird die wäßrige Monomerenlösung in bekannter Weise in einem mit Wasser nicht mischbaren organischen Lösungsmittel wie Cyclohexan, Toluol, Xylol, Heptan oder hochsiedenden Benzinfraktionen unter Zusatz von 0,5 - 8%, vorzugsweise 1 - 4 % , bekannter Emulgatoren vom W/O-Typ, emulgiert und mit üblichen radikal bildenden Initiatoren polymerisiert.

Der Initiator kann sowohl wasserlöslicher Natur sein und wird dann in der Monomerenlösung gelöst, er kann aber auch öllöslich sein und wird in diesem Fall der fertigen W/O-Emulsion oder der Ölphase zusetzt. Eine detailliertere Beschreibung des Verfahrens findet sich beispielsweise in der deutschen Patentschrift 1 089 173.

Bei der Durchführung der Copolymerisation in einem mit Wasser mischbaren organischen Lösungsmittel arbeitet man unter den Bedingungen der Fällungspolymerisation. Hierbei fällt das Polymerisat direkt in fester Form an und kann durch Abdestillieren des Lösungsmittels oder Absaugen und Trocknen isoliert werden.

Als wassermischbare organische Lösungsmittel, die zur Durchführung des erfindungsgemäßen Herstellungsverfahrens geeignet sind, kommen insbesondere wasserlösliche Alkanole, nämlich solche mit 1 bis 4 C-Atomen, wie Methanol, Ethanol, Propanol, Isopropanol, n-, sec- und iso-Butanol, vorzugsweise aber tert. Butanol in Betracht.

Der Wassergehalt der hierbei als Lösungsmittel eingesetzten niederen Alkanole sollte 6 Gewichtsprozent nicht überschreiten, da sonst eine Klumpenbildung bei der Polymerisation auftreten kann. Vorzugsweise wird bei einem Wassergehalt von 0 - 3 % gearbeitet.

Die Menge des einzusetzenden Lösungsmittels richtet sich bis zu einem gewissen Grad nach der Art der eingesetzten Comonomeren.

In der Regel werden pro 100 g Gesamtmonomere 200 bis 1000 g des Lösungsmittels eingesetzt.

Bevorzugt ist die Durchführung der Reaktion in einem Milieu mit hohem Wasseranteil, d.h. unter den Bedingungen der Lösungs- bzw. der Gelpolymerisation oder der Emulsionspolymerisation.

Die erfindungsgemäßen Copolymerisate sind ggf. noch partiell verseift. Als Verseifungsmittel kann prinzipiell jede wasserlösliche Base eingesetzt werden, deren Stärke für eine Reaktion mit den hydrolysierbaren Gruppen ausreicht. Bevorzugt werden jedoch NaOH, KOH, $NH_3$ oder neutrale oder saure Alkali-(insbesondere Natrium- und Kalium-) und Ammoniumsalze der Kohlensäure, Borsäure und Phosphorsäure. Das Verseifungsmittel wird entweder schon der Monomerenlösung zugesetzt oder mit dem Polymerisat vermischt. Die Verseifung erfolgt daher - je nach Verfahrensweise - bereits während der normalerweise exotherm verlaufenden Polymerisation oder durch weitere Wärmezufuhr im Anschluß an die Polymerisation. Auch eine Kombination beider Verfahrensweisen ist möglich.

Die in vielen Fällen vorteilhaften, Borat-Anionen enthaltenden Produkte können auf einfache Weise erhalten werden, indem Natrium- oder Kaliumsalze der Borsäure (Ortho-, Meta- oder Polyborate bzw. Borsäure zusammen mit NaOH oder KOH) als Verseifungsmittel eingesetzt werden.

Erfindungsgemäße und erfindungsgemäß einzusetzende Copolymerisate mit besonders hohem Polymerisationsgrad werden erhalten, wenn man die Polymerisation in wäßriger Lösung nach dem Verfahren der sogenannten Gelpolymerisation durchführt. Dabei werden 15 - 50%ige wäßrige Lösungen der Comonomeren mit bekannten geeigneten Katalysatorsystemen und ggf. mit einem der genannten Verseifungsmittel ohne mechanische Durchmischung unter Ausnutzung des Trommsdorff-Norrish-Effektes (Bios Final Rep. 363,22; Makromol. Chem. 1, 169 (1947))polymerisiert. Aus den hohen Viskositäten wäßriger, insbesondere elektrolythaltiger wäßriger Lösungen der in dieser Weise hergestellten erfindungsgemäßen und erfindungsgemäß einzusetzenden wasserlöslichen Copolymerisate lassen

sich unter Zugrundelegung der üblichen Modellvorstellungen über den Zusammenhang von Viskosität und mittlerem Molekulargewicht polymerer Substanzen, sowie unter Berücksichtigung von Vergleichswerten ähnlich gebauter Polymerer für die erfindungsgemäßen Produkte mittlere Molekulargewichte von $2 \cdot 10^6$ bis $20 \cdot 10^6$ abschätzen. Die Polymerisationsreaktion kann sowohl bei Normaldruck als auch unter erhöhtem Druck durchgeführt werden. Wie üblich kann die Polymerisation auch in einer Schutzgasatmosphäre, vorzugsweise unter Stickstoff, ausgeführt werden.

Zur Auslösung der Polymerisation können energiereiche elektromagnetische Strahlen oder die üblichen chemischen Polymerisationsinitiatoren herangezogen werden, z.B. organische Peroxide, wie Benzoylperoxid, tert. Butyl-hydroperoxid, Methyl ethyl-keton-peroxid, Cumol-hydroperoxid, Azoverbindungen wie Azo-di-iso-butyro-nitril oder 2,2'-Azo-bis-(2-amidinopropan)-dihydrochlorid $\left( HN{=}\underset{NH_2}{C}{-}C(CH_3)_2{-}N{=}N{-}C(CH_3)_2{-}\underset{NH_2}{C}{=}NH \cdot 2\ HCl \right)$ sowie anorganische Peroxiverbindungen wie $(NH_4)_2S_2O_8$ oder $K_2S_2O_8$ oder $H_2O_2$ gegebenenfalls in Kombination mit Reduktionsmitteln wie Natriumhydrogensulfit und Eisen-II-Sulfat oder Redoxsysteme, welche als reduzierende Komponente eine aliphatische oder aromatische Sulfinsäure, wie Benzolsulfinsäure und Toluolsulfinsäure oder Derivate dieser Säuren, enthalten, wie z.B. Mannichaddukte aus Sulfinsäure, Aldehyden und Aminoverbindungen, wie sie in der deutschen Patentschrift 1 301 566 beschrieben sind. Pro 100 g Gesamtmonomeren werden in der Regel 0,03 bis 2 g des Polymerisationsinitiators eingesetzt.

Durch mehrstündiges Nachheizen der nach dem Verfahren der Gelpolymerisation erhaltenen Polymerisatgele im Temperaturbereich von 50 - 130°C, vorzugsweise 70 - 100°C, können die Qualitätseigenschaften der Polymerisate noch verbessert werden.

Die auf diesem Wege hergestellten, in Form wäßriger Gallerten vorliegenden erfindungsgemäßen Copolymerisate können nach mechanischer Zerkleinerung mit geeigneten Apparaten direkt in Wasser gelöst werden und zum Einsatz gelangen. Sie können aber auch nach Entfernung des Wassers durch bekannte Trocknungsprozesse in fester Form erhalten und erst bei ihrer Verwendung wieder in Wasser aufgelöst werden.

Die erfindungsgemäßen Copolymerisate sind hervorragend geeignet als Hilfsmittel bei Bohrspülungen. Sie zeigen dabei eine sehr gute Schutzkolloidwirkung sowohl bei hohen Temperaturen als auch bei hohen Elektrolytkonzentrationen und sind insbesondere im Hinblick auf Elektrolytstabilität und Alterungsbeständigkeit den nächstvergleichbaren aus der US-PS 2 775 557 und den DT-PS 1 300 481 und 24 44 108 bekannten Bohrspülzusätzen erheblich überlegen.

Gegenüber den Copolymerisaten der DE-OS 29 31 897.6 weisen die erfindungsgemäßen Produkte eine weiter verbesserte Kombination wertvoller anwendungstechnischer Eigenschaften auf, die sich insbesondere beim Einsatz für besonders kritische Bohraufgaben unter schwierigen Bedingungen in großen Tiefen und in Gegenwart von Formationswassern mit sehr hohem Elektrolytgehalt vorteilhaft auswirken.

Die erfindungsgemäßen Polymerisate zeichnen sich außerdem insbesondere durch Stabilität gegenüber 10 - 40%igen Mineralsäuren wie HCl, $HNO_3$, $H_2SO_4$, $HClO_4$ u.s.w. aus, ebenso gegenüber organischen Säuren wie HCOOH und $CH_3COOH$. Selbst bei mehrstündiger Lagerung der sauren Lösungen treten keine Ausfällungen auf. Die erfindungsgemäßen Copolymerisate sind daher auch als Verdicker für Säuren in hervorragender Weise geeignet.

Zur Formulierung von wäßrigen Bohrspülungen werden die erfindungsgemäßen Mischpolymerisate in Konzentrationen von 0,5 bis 40 $kg/m^3$, vorzugsweise 3 - 30 $kg/m^3$, eingesetzt. Die wäßrigen Bohrspülungen enthalten zur Viskositätserhöhung und Abdichtung durchbohrter Formationen vorwiegend Bentonite. Zur Dichteerhöhung der Bohrschlämme werden Schwerspat, Kreide und Eisenoxide zugesetzt.

Bentonit, Schwerspat, Kreide und Eisenoxid können allein oder in den verschiedensten Mischungsverhältnissen den Bohrspülungen zugegeben werden. Der begrenzende Faktor nach oben sind die rheologischen Eigenschaften der Bohrschlämme.

Werden erfindungsgemäße Copolymerisate zu üblichen Tiefbohrzementschlämmen zugesetzt, so erhält man Produkte mit verbesserten Fließ- und Abbinde—Eigenschaften.

In den folgenden Ausführungsbeispielen, die die Herstellung der erfindungsgemäß einzusetzenden wasserlöslichen Copolymeren veranschaulichen und in der anschließende Tabelle sind die folgenden Abkürzungen verwendet worden:

| | | |
|---|---|---|
| AM | : | Acrylamid |
| MAM | : | Methacrylsäureamid |
| VFA | : | Vinylformamid |
| VMA | : | N-Vinyl-N-methyl-acetamid |
| VPYR | : | N-Vinylpyrrolidon |
| VCAP | : | N-Vinylcaprolactam |
| SSS | : | Styrolsulfonsäure, wobei die Hochzahlen die obige Bedeutungen haben. |

In der Spalte "Katalysatoren" bedeuten

| | | |
|---|---|---|
| A | : | Azoisobutyronitril |
| B | : | Ammoniumpersulfat |

Beispiel 1

In einem Polymerisationskolben von 1 l Inhalt, ausgestattet mit Rührer, Gaseinleitungsrohr und Thermometer werden 400 g Wasser vorgelegt und 90 g Natrium-p-styrolsulfonat sowie 10 g N-Vinyl-N-methylacetamid darin gelöst. Die Lösung, die einem pH-Wert von 13 aufweist, wird unter Rühren und Einleiten eines schwachen Stickstoffstroms auf 60°C angeheizt. Bei dieser Temperatur wird die Polymerisation durch Zugabe einer Lösung von 0,5 g Azoisobutyronitril in 2,5 g Dimethylformamid initiiert. Nach einer Induktionsperiode von ca. 60 Min. setzt die Polymerisation ein, die Temperatur steigt im Verlaufe von ca. 45 Min. bis auf 67°C an und das Reaktionsgemisch wird viskos. Es wird noch 2 Stunden bei 80°C nachgeheizt. Man erhält eine klare, gelb-braune, hochviskose Lösung mit einem K-Wert von 190 nach Fikentscher, die direkt der Verwendung als Bohrspülzusatz zugeführt werden kann.

In analoger Weise können auch die in der folgenden Tabelle zusammengestellten Copolymerisate synthetisiert werden, bei denen als Reaktionsmedium Wasser dient.

T a b e l l e I

| Beispiel | Monomerenzusammensetzung | | | | | Katalysator | K-Wert | Reaktionsmedium |
|---|---|---|---|---|---|---|---|---|
| | AM | VMA | SSS | VFA | VPYR | | | |
| 2 | | 20 | 80[1] | | | A | 180,5 | Wasser |
| 3 | | 30 | 70[1] | | | A | 175 | Wasser |
| 4 | | 40 | 60[1] | | | A | 160 | Wasser |
| 5 | | 50 | 50[1] | | | A | 145 | Wasser |
| 6 | 10 | 40 | 50[1] | | | A | 150 | Wasser |
| 7 | 10 | 30 | 60[1] | | | A | 172 | Wasser |
| 8 | 15 | 20 | 65[1] | | | A | 181 | Wasser |
| 9 | 25 | 10 | 65[1] | | | A | 187 | Wasser |
| 10 | 25 | 25 | 50[1] | | | A | 181 | Wasser |

Beispiel 11

In einem Polymerisationskolben von 1 l Inhalt, ausgerüstet mit Rührer, Gaseinleitungsrohr und Thermometer werden 410 g Wasser vorgelegt und 130 g Na-Styrosulfonat, 50 g Acrylamid sowie 20 g N-Vinyl-N-methylacetamid darin gelöst. Die Lösung wird auf eine Temperatur von 21°C eingestellt und 10 g einer 1 %igen wäßrigen Ammoniumpersulfatlösung als Katalysator zugegeben. Die Reaktionsklösung hat einen pH-Wert von > 12. Der Rührer wird entfernt und man leitet einen schwachen $N_2$-Strom in die Lösung ein. Nach einer Induktionsperiode von ca. 2 Stunden setzt die Polymerisation ein und die Temperatur steigt im Verlaufe von 1 1/2 Stunden bis auf 75°C an. Es wird 2 Stunden bei 80°C nachgeheizt. Man erhält ein schwach trübes, leicht gelbliches, nach Erkalten schneidbares Gel mit einem K-Wert von 223 nach Fikentscher. Das Gel wird anschließend mechanisch zerkleinert, bei 80°C im Vakuumtrockenschrank getrocknet und in einer Schwingmühle zu einem feinen, gut wasserlöslichen Pulver vermahlen.

Beispiel 12

In einem 1 l Glaskolben, ausgestattet mit Rührer, Rückflußkühler und Gaseinleitungsrohr bereitet man eine Lösung aus 70,2 g eines techn. Isoparaffingemisches mit einem Siedebereich von 200-240°C (ISOPAR M), 3,1 g eines Kondensationsprodukts von Sorbitan-trioleat mit 20 Mol Ethylenoxid und 6,2 g Diglycerin-sesquioleat (Lösung I).

In einem zweiten Gefäß werden nacheinander 7,8 g Natriumstyrolsulfonat, 54,6 g Acrylamid, 11,7 g N-Vinylformamid und 3,9 g N-Vinyl-N-methyl-acetamid in 102,5 g entionisiertem Wasser gelöst. Der pH-Wert der Lösung wird mit wenigen Tropfen 1-N-HCl auf 7,5 gestellt (Lösung II).

Lösung II wird nun bei Raumtemperatur in Lösung I emulgiert, dann spült man die Emulsion unter gutem Rühren 30 Min. mit Stickstoff und heizt schließlich auf 65°C. Sobald diese Temperatur erreicht ist, wird eine Lösung von 25 mg Dicyclohexyl-peroxidicarbonat in 0,5 ml Toluol zugespitzt.
Nach einer Induktionsperiode von 20 - 30 Min. setzt die Polymerisation ein, was am Ansteigen der Innentemperatur erkennbar ist, gleichzeitig wird die Emulsion zunehmend

transparenter. Die maximale Reaktionstemperatur sollte 90°C nicht wesentlich überschreiten, erforderlichenfalls muß gekühlt werden. Nach dem Abklingen der Hauptreaktion heizt man noch 30 Min. bei 70°C nach und läßt dann auf Raumtemperatur abkühlen.

Man erhält eine lagerstabile, niedrigviskose W/O-Emulsion mit einem Polymergehalt von 30 %. Die Gewinnung des Copolymerisats in Substanz kann leicht dadurch erfolgen, daß man die vorliegende Emulsion in einen Überschuß von Aceton eingießt. Das Copolymerisat fällt dabei aus und kann z.B. durch Abfiltrieren, Absaugen oder Zentrifugieren und gegebenenfalls Nachwaschen mit Aceton isoliert werden.

Beispiel 13 - 16

Man verfährt wie in Beispiel 12, die Wasserphase (Lösung II) hat jedoch die inder folgenden Tabelle II angegebene Zusammensetzung:

T a b e l l e II

| Bsp. Nr. | Zusammensetzung von Lösung II in g AM | SSS | VFA | VMA | $H_2O$ |
|---|---|---|---|---|---|
| 13 | 35,1 | 39,0 | 3,9 | - | 102,5 |
| 14 | 46,8 | 15,6 | 15,6 | - | 102,5 |
| 15 | 46,8 | 15,6 | - | 15,6 | 102,5 |
| 16 | 9,8 | 42,2 | 13,0 | - | 102,5 |

Die Isolierung der Polymerisate kann, wie oben beschrieben, durch Fällung mit einem wassermischbaren und die Ölphase lösenden Lösungsmittel, vorzugsweise mit Aceton, erfolgen.

Zur Invertierung der W/O-Emulsion gibt man 1,67 g davon in 100 ml entionisiertes Wasser, in dem zuvor 0,25 g eines Nonyl-phenol-Ethylenoxidaddukts mit 10 Mol Ethylenoxid gelöst wurden. Man rührt 10 Min. und verdünnt schließlich mit entionisierten Wasser auf 1000 g. Die K-Werte der so erhaltenen 0,05 %-Lösungen können der Tabelle III entnommen werden.

Tabelle III

| Bsp. | K-Wert 25°C | Prozentuale Zusammensetzung des Polymeren | | | |
|---|---|---|---|---|---|
| | | AM | SSS | VFA | VMA |
| 12 | 167,3 | 70 | 10 | 15 | 5 |
| 13 | 229,9 | 45 | 50 | 5 | - |
| 14 | 188,2 | 60 | 20 | 20 | - |
| 15 | 213,8 | 60 | 20 | - | 20 |
| 16 | 179,6 | 15 | 65 | 20 | - |

Beispiel 14:

In einem Polymerisationskolben von 1 l Inhalt, ausgestattet mit Rührer, Rückflußkühler, Gaseinleitungsrohr und elektrisch beheiztem Wasserbad werden 600 ml tert. Butanol vorgelegt und darin 70 g p-Styrolsulfonsäure gelöst. Dann werden 8,5 l $NH_3$-Gas eingeleitet, wodurch das Styrolsulfonsäure-$NH_4$ in feiner Form ausfällt und eine dünnbreiige Dispersion entsteht, deren pH in wäßriger Verdünnung 7 ist. Es werden anschließend 10 g Methacrylamid und 20 g Vinylpyrrolidon zugegeben und unter Einleiten von Stickstoff mit dem elektrischen Wasserbad auf 60°C angeheizt. Nach Zugabe von 1 g Azoisobutyronitril wird $1^1/2$ Stunden bei 60°C und 1 Stunde bei 70°C gerührt. Während dieser Zeit entsteht ohne deutlich erkennbaren reaktionsbedingten Temperaturanstieg ein dicker, aber rührbarer Brei, der dann noch weitere 2 Stunden bei 80°C nachgerührt wird.

Das Polymere kann durch Absaugen und Trocknen unter Vakuum bei 60°C isoliert werden. Es kann jedoch auch das Lösungsmittel direkt unter vermindertem Druck aus dem Reaktionsgemisch abdestilliert werden. Man erhält das Polymere in Form eines schwach gelblichen, leichten Pulvers, das sich in Wasser gut löst. K-Wert nach Fikentscher 164,6.

Beispiel 15

In gleicher Apparatur wie im Beispiel 14 werden 600 ml tert. Butanol vorgelegt und 70 g p-Styrolsulfonsäure, 10 g Methacrylamid und 20 g N-Vinylcaprolactam darin gelöst. Diese saure Lösung wird dann unter gleichen Bedingungen und gleicher Verfahrensweise wie im Beispiel 14 unter Zusatz von 1 g Azoisobutyronitril polymerisiert. Das ausgefallene Polymere wird anschließend isoliert,und man erhält ein weißes Pulver mit einem K-Wert nach Fikentscher von 205,7. Die wäßrige Lösung des Polymeren ist trüb.

Beispiel 16:

Bei gleicher Verfahrensweise in gleicher Apparatur wie im Beispiel 14 unter Einsatz von 600 ml tert. Butanol, 40 g Styrolsulfonsäure, 4,9 l $NH_3$-Gas, 30 g Acrylamid, 30 g N-Vinyl-N-methylacetamid und 1 g Azoisobutyronitril erhält man ein Polymerenpulver, das sich gut in Wasser löst, mit einem K-Wert nach Fikentscher von 124,7.

P a t e n t a n s p r ü c h e

1. Wasserlösliches Copolymerisat, das in statistischer Verteilung zu 5 bis 95 Gew.% aus Resten der Formel I

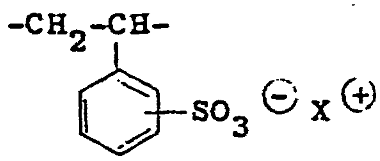

(I)

5 bis 95 Gew. % aus Resten der Formel II

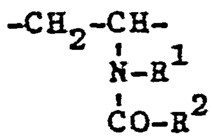

(II)

0 bis 80 Gew. % aus Resten der Formel III

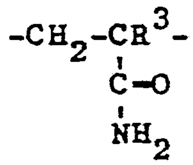

(III)

besteht sowie dessen durch Partialhydrolyse erhältliche Derivate, wobei

$R^1$ und $R^2$ gleich oder verschieden sind und Wasserstoff, Methyl oder Ethyl, oder gemeinsam Trimethylen, oder Pentamethylen

$R^3$ Wasserstoff oder Methyl und

$X^{\oplus}$ ein Kation bedeutet.

2. Wasserlösliches Copolymerisat gemäß Anspruch 1, dadurch gekennzeichnet, daß es in statistischer Verteilung zu
40 - 80 Gew. % aus Resten der Formel I,
10 - 30 Gew. % aus Resten der Formel II, und zu
0 - 60 Gew. % aus Resten der Formel III
besteht.

3. Wasserlösliches Copolymerisat gemäß Anspruch 1, dadurch gekennzeichnet, daß $X^{\oplus}$ ein Natrium- oder Kaliumkation oder ein Kation der Formel $\overset{\oplus}{H}NR^4_3$ bedeutet, wobei die drei Reste $R^4$ gleich oder verschieden sind und für Wasserstoff, Alkyl mit 1 bis 4 C-Atomen oder Hydroxyethyl stehen.

4. Wasserlösliches Copolymerisat gemäß den Ansprüchen 1 bis 3, dadurch gekennzeichnet, daß durch Partialhydrolyse ein

Anteil von bis zu 60 % der ursprünglich vorhandenen Reste der Formel III durch Reste der Formel V

$-CH_2-CR^3-$
$\quad\quad COO^{\ominus} X^{\oplus}$ (V)

worin $R^3$ und $X^{\oplus}$ die in Anspruch 1 angegebenen Bedeutungen haben, ersetzt ist.

5. Verfahren zur Herstellung eines wasserlöslichen Copolymerisates, das in statistischer Verteilung zu 5 bis 95 Gew. % aus Resten der Formel I

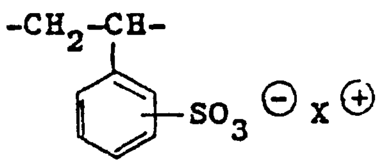

(I)

5 bis 95 Gew. % aus Resten der Formel II

$-CH_2-CH-$
$\quad\quad N-R^1$
$\quad\quad CO-R^2$ (II)

0 bis 80 Gew. % aus Resten der Formel III

$-CH_2-CR^3-$
$\quad\quad C=O$
$\quad\quad NH_2$ (III)

besteht sowie dessen durch Partialhydrolyse erhältliche Derivate, wobei

$R^1$ und $R^2$ gleich oder verschieden sind und Wasserstoff, Methyl oder Ethyl, oder gemeinsam Trimethylen, oder Pentamethylen

$R^3$ Wasserstoff oder Methyl und

$X^{\oplus}$ ein Kation bedeutet,

dadurch gekennzeichnet, daß man zur Herstellung von je 100 Gewichtsteilen des Copolymerisats 5 bis 95 Gewichtsteile Styrolsulfonsäure der Formel Ia

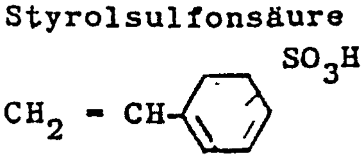

(Ia)

in Wasser oder in einer Wasser/Alkanol-Mischung, in der auch

das fertige Copolymerisat noch löslich ist, oder einem wassermischbaren organischen Lösungsmittel löst, für den Fall, daß $R^1$ und $R^2$ nicht gemeinsam Tri- oder Pentamethylen bedeuten, obligatorisch, für den Fall, daß $R^1$ und $R^2$ gemeinsam Tri- oder Pentamethylen bedeuten, gegebenenfalls, durch Zusatz einer Base die Sulfosäure neutralisiert, danach 5 - 95 Gewichtsteile eines Vinylacylamins der Formel IIa

$$\begin{array}{l} \quad\quad\quad\quad R^1 \\ CH_2 = CH-N-CO-R^2 \end{array} \qquad (IIa)$$

worin $R^1$ und $R^2$ gleich oder verschieden sind und Wasserstoff Methyl oder Ethyl oder gemeinsam Trimethylen oder Pentamethylen bedeuten und gegebenenfalls 0 bis 80 Gewichtsteile Acrylamid und/oder Methacrylamid zufügt, die Copolymerisation in an sich bekannter Weise einleitet und bei 10 bis 120°C durchführt und gegebenenfalls die Copolymerisate während oder nach der Polymerisationsreaktion noch partiell verseift.

6. Verfahren zur Herstellung eines wasserlöslichen Copolymerisats, das in statistischer Verteilung zu 5 bis 95 Gew. % aus Resten der Formel I

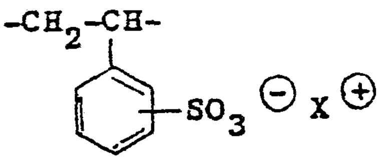

(I)

5 bis 95 Gew. % aus Resten der Formel II

$$\begin{array}{l} -CH_2-CH- \\ \quad\quad\quad N-R^1 \\ \quad\quad\quad CO-R^2 \end{array} \qquad (II)$$

0 bis 80 Gew. % aus Resten der Formel III

$$\begin{array}{l} -CH_2-CR^3- \\ \quad\quad\quad C=O \\ \quad\quad\quad NH_2 \end{array} \qquad (III)$$

besteht sowie dessen durch Partialhydrolyse erhältliche Derivate, wobei

$R^1$ und $R^2$ gemeinsam Trimethylen, oder Pentamethylen

$R^3$ Wasserstoff oder Methyl und

$X^{\oplus}$ ein Kation bedeutet,

dadurch gekennzeichnet, daß man zur Herstellung von je 100 Gewichtsteilen des Copolymerisats 5 bis 95 Gewichtsteile Styrolssulfonsäure der Formel Ia

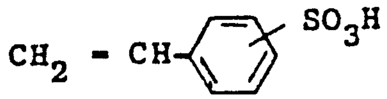 (Ia)

in Wasser oder in einer Wasser/Alkanol-Mischung, in der auch das fertige Copolymerisat noch löslich ist, oder einem wassermischbaren organischen Lösungsmittel mit 5 - 95 Gewichtsteilen eines Vinylacylamins der Formel IIa

$$CH_2 = CH-N(R^1)-CO-R^2 \qquad (IIa)$$

worin $R^1$ und $R^2$ gemeinsam Trimethylen oder Pentamethylen bedeuten und gegebenenfalls 0 bis 80 Gewichtsteilen Acrylamid und/oder Methacrylamid in an sich bekannter Weise bei 10 bis 120°C copolymerisiert und gegebenenfalls die Copolymerisate während oder nach der Polymerisationsreaktion noch partiell verseift.

7. Verfahren gemäß den Ansprüchen 5 oder 6, dadurch gekennzeichnet, daß man zur Herstellung von je 100 Gewichtsteilen des Copolymerisats 40 - 80 Gewichtsteile Styrolsulfonsäure der Formel Ia, 10 - 30 Gewichtsteile des Vinyl-acylamins der Formel IIa und 0 - 60 Gewichtsteile Acrylamid und/oder Methacrylamid einsetzt.

8. Verfahren gemäß den Ansprüchen 5 bis 7, dadurch gekennzeichnet, daß ein Anteil von bis zu 60 % der ursprünglich vorhandenen Reste der Formel III zu Resten der Formel V

$$-CH_2-CH(COO^{\ominus}\ X^{\oplus})- \qquad (V)$$

verseift wird.

9. Verwendung des Copolymerisats der Ansprüche 1 bis 4 als Bohrspülungs-Hilfsmittel.

10. Verwendung des Copolymerisats der Ansprüche 1 bis 4 als Hilfsmittel in Tiefbohr-Zementschlämmen.

Europäisches Patentamt

# EUROPÄISCHER RECHERCHENBERICHT

0079071

Nummer der Anmeldung

EP 82 11 0264

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | C 08 F 220/56<br>C 08 F 226/02<br>C 08 F 212/14<br>C 09 K 7/02 //<br>(C 08 F 220/56<br>C 08 F 226/02<br>C 08 F 212/14 )<br>(C 08 F 226/02<br>C 08 F 220/56<br>C 08 F 212/14 )<br>(C 08 F 212/14<br>C 08 F 226/02<br>C 08 F 220/56 ) |
| A | EP-A-0 023 712 (CASSELLA)<br>* Ansprüche 1,6 * | 1-10 | |
| | ----- | | |
| | | | RECHERCHIERTE SACHGEBIETE (Int. Cl. 3) |
| | | | C 08 F |

Der vorliegende Recherchenbericht wurde für alle Patentansprüche erstellt.

| Recherchenort | Abschlußdatum der Recherche | Prüfer |
|---|---|---|
| DEN HAAG | 17-02-1983 | CAUWENBERG C.L.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82